## Europäisches Patentamt
## European Patent Office
## Office européen des brevets

(19)

(11) Veröffentlichungsnummer: **0 033 116**
**A2**

(12) # EUROPÄISCHE PATENTANMELDUNG

(21) Anmeldenummer: **81100370.6**

(22) Anmeldetag: **19.01.81**

(51) Int. Cl.³: **B 29 D 27/04**

(30) Priorität: **25.01.80 DE 3002560**

(43) Veröffentlichungstag der Anmeldung:
**05.08.81 Patentblatt 81/31**

(84) Benannte Vertragsstaaten:
**AT BE CH FR GB IT LI LU NL SE**

(71) Anmelder: **Kunststoffwerk Philippine GmbH & Co. KG**
**Max-Schwarz-Strasse 23**
**D-5420 Lahnstein 2(DE)**

(72) Erfinder: **Klingelhöfer, Werner, Dr.**
**Villeneuve-Strasse 10**
**D-5423 Braubach(DE)**

(72) Erfinder: **Schmitt, Ingo**
**Im Jagenstiel**
**D-5423 Braubach(DE)**

(74) Vertreter: **Hentschel, Peter, Dipl.-Ing.**
**Kurfürstenstrásse 58**
**D-5400 Koblenz(DE)**

(54) Verfahren und Vorrichtung zum Hinterschäumen von Weichschaum-Kunststoffolien mit Hartschaum-Kunststoff.

(57) Bei einem Verfahren und einer Vorrichtung zum Hinterschäumen von Weichschaum-Kunststoffolien mit Hartschaum-Kunststoff wird die Kunststoffolie (7) nach Erwärmen an die Konturen des Formunterteils (1) mittels Vakuum angepaßt und bleibt während des Ausschäumvorganges an die Innenwandung des Formunterteils (1) angesaugt.

Um zu erreichen, daß die Kunststoffolie (7) die Ränder des Schaumkörpers (16) umgreift und auf der Rückseite desselben fest anliegt, wird ein Rahmen (2) zwischen Formunterteil (1) und -deckel (3) angeordnet, dessen Öffnungsquerschnitt kleiner ist als die Aussparung im Formunterteil, derart, daß ein umlaufender Absatz (8) gebildet ist. Ferner wird in der Trennebene zwischen Formunterteil (1) und Rahmen (2) ebenfalls ein Vakuum erzeugt, derart, daß die Folie (7) in den zwischen Formunterteil (1) und Rahmen (2) gebildeten umlaufenden Absatz (8) gesaugt und so die Umbiegung der Folie (7) gebildet wird.

EP 0 033 116 A2

-FIG. 1

- 1 -

Verfahren und Vorrichtung zum Hinterschäumen von
Weichschaum-Kunststoffolien mit Hartschaum-Kunststoff

Die Erfindung betrifft ein Verfahren zum Hinterschäumen von Weichschaum-Kunststoffolien, vorzugsweise PVC-Folien, mit Hartschaum-Kunststoff, wobei
die Kunststoffolie nach Erwärmen an die Konturen des
Formunterteils mittels Vakuum angepaßt und während
des Ausschäumvorganges an die Innenwandung des Formunterteils angesaugt bleibt sowie eine Vorrichtung
zur Durchführung des Verfahrens.

Es ist bekannt, vorgeformte Kunststoffolien mit
Kunststoffschaum zu hinterschäumen, um auf diese
Weise tragfähige Schaumkörper zu erzielen. Solche
Schaumkörper finden vorzugsweise in Kraftfahrzeugen
als Wand- und Deckenverkleidungen oder als Armaturentafeln o. dgl. Verwendung. Die Kunststoffolie
bildet die sichtbare Aussenhaut. Sie ist farbig getönt und hat lederartigen Charakter.

Bei der Herstellung solcher Schaumkörper werden sog.
Halbhart-Folien, beispielsweise aus Acryl-Butadien-
Styrol verwendet, welche eine sehr harte Oberfläche
haben und daher die Gefahr von Verletzungen bei

- 2 -

Kraftfahrzeugunfällen erhöhen. Man ist daher dazu
übergegangen, derartige Schaumkörper mit Weichschaum-
PVC-Folien zu verkleiden, wodurch die Einbauteile
eine weiche, gegen Schlag und Stoß nachgiebigere
Oberfläche erhalten.

Bei der Herstellung der Schaumkörper unter Verwendung einer Schaum-PVC-Folie wird nach Erwärmen die
Folie über in dem Formunterteil befindliche Vakuumleitungen an die Konturen des Formunterteils angesaugt und erhält so die gewünschte Form. Hierbei
dient der überstehende Rand der Folie als Dichtungsflansch zwischen Formunterteil und -deckel.

Zum Hinterschäumen der Folie werden nun die Schaumbildungskomponenten in die Form eingefüllt und der
Formdeckel geschlossen. Der sich entwickelnde Schaum
füllt den Freiraum zwischen vorgeformter bzw. angesaugter Weichschaumfolie und dem Formdeckel unter
Druck aus. Hierbei ergibt sich jedoch der Nachteil,
daß das Schaummaterial auch in die Trennebene zwischen Formunterteil und -deckel hineingedrückt wird
und auf dem umlaufenden Flansch der Folie haften
bleibt. Nach dem Entformen muß daher der Dichtungsflansch mitsamt dem anhaftenden Schaumstoff abgetrennt werden, was sehr zeitaufwendig ist. Darüber
hinaus entstehen an den Schaumkörpern sehr unschöne
Schnittkanten, an denen Kunststoffmaterial sichtbar
bleibt. Diese Stellen müssen bei Einbau der Teile,
beispielsweise in die Kraftfahrzeuge, durch Abdeckplatten verkleidet werden, was sehr kostenaufwendig
ist.

Auch bei den unter Verwendung einer Weichfolie hergestellten Schaumkörpern läßt sich dieser Nachteil
nicht dadurch vermeiden, daß man die Folie um die Ränder der Schaumkörper herumbiegt und anklebt, da
der Schaumstoff wie oben beschrieben auch in diesem
Bereich an der Folie haftet. Ein Umbiegen der Folie
mitsamt Kunststoff ist schon wegen der Härte des
Schaumkunststoffes nicht möglich und würde zur Zerstörung des Materials führen.

Will man trotzdem Schaumkörper mit sauberer Sichtfläche und einer auf deren Rückseite umgebogenen und
befestigten Weichfolie erzielen, so ist dies bisher
nur in zwei Arbeitsgängen möglich:

Zunächst muß man den Schaumkörper herstellen und dann
nachträglich die Folie auf das Formteil aufkleben.
Dieses Verfahren ist somit sehr zeit- und kostenaufwendig.

Aufgabe der Erfindung ist es, ein Verfahren zu schaffen, welches ein problemloses Hinterschäumen von
Weichschaum-Kunststoffolien mit Hartschaum in der
Weise ermöglicht, daß die Folie die Ränder des
Schaumkörpers umgreift und auf der Rückseite desselben fest anliegt. Ferner ist es Aufgabe der Erfindung
eine Vorrichtung zur Durchführung des Verfahrens zu
schaffen.

Diese Aufgabe wird erfindungsgemäß durch ein Verfahren gelöst, welches dadurch gekennzeichnet ist, daß
ein Rahmen zwischen Formunterteil und -deckel angeordnet wird, dessen Öffnungsquerschnitt kleiner ist
als die Aussparung im Formunterteil, derart, daß ein
umlaufender Absatz gebildet ist, daß ferner in der
Trennebene zwischen Formunterteil und Rahmen ein Vakuum erzeugt wird, derart, daß die Folie in den zwischen Formunterteil und Rahmen gebildeten umlaufenden Absatz gesaugt und so die Umbiegung (Umbug) der
Folie gebildet wird.

In weiterer vorteilhafter Ausgestaltung des Verfahrens wird der Folienrand nach Ansaugen der Folie an die Konturen des Formunterteils und den Absatz des Rahmens nach Schließen des Formdeckels zwischen dem Deckelrand und dem Rahmen während des Ausschäumens eingespannt.

Vorteilhaft ist weiterhin, daß nach Durchführung des Ausschäumens des zwischen Folie, Rahmen und Deckelvertiefung gebildeten Schäumraumes die Saugquelle abgeschaltet und zum Entformen Deckel und Rahmen vom Formunterteil abgehoben und das fertige Formteil aus dem Formunterteil entnommen wird.

In weiterer vorteilhafter Ausgestaltung des Verfahrens wird der freie Folienrand auf der Rückseite des Formteils hinter der Umbiegungsstelle abgeschnitten.

Mit Hilfe des erfindungsgemäßen Verfahrens ist es erstmals möglich, in einem Arbeitsgang eine Weichfolie auf einem Formteil aus Kunststoff-Hartschaum und gleichzeitig auf der Rückseite desselben im Randbereich zu befestigen, derart, daß auch der Rand des Formteils eine saubere Sichtfläche bietet.

Darüber hinaus gewährleistet das Verfahren die Herstellung hochqualifizierter Schaumkörper auch komplizierter Formgebung, da die zu hinterschäumende Weichfolie vor Einleitung und während des Schäumprozesses verschiebe- und verformungssicher an bzw. in der Schäumform gehalten wird. Die Entstehung von Falten ist dabei ausgeschlossen. Der Zusammenhalt von Schaumkörper und Folie ist dauerhaft und unlösbar.

Nicht zuletzt bringt das erfindungsgemäße Verfahren
eine große Kostenersparnis mit sich.

Die Vorrichtung zur Durchführung des Verfahrens besteht aus einer einen Schäumraum umschließenden
Schäumform, welche sich aus einem Formunterteil, einem auf demselben aufgelegten Rahmen und einem oberen Formdeckel zusammensetzt, und wobei das Formunterteil Öffnungen aufweist, welche mit einem Vakuum
beaufschlagbar sind. Erfindungsgemäß weisen der Rahmen und das Formunterteil düsenartige Durchgangsöffnungen auf, die in die Trennebene zwischen Rahmen und Formunterteil bzw. in den Schäumraum münden
und an vakuumführende Leitungen angeschlossen sind.
Das Anlegen eines Vakuums innerhalb des Formunterteils ist nur bei sehr kompliziert gestalteten Teilen erforderlich. Bei der Herstellung einfacher Teile hat bereits das Anlegen eines Vakuums im Rahmen
eine entsprechende Verformung der Folie auch innerhalb des Formunterteils zur Folge, so daß die Einrichtungen im Formunterteil zur Erzeugung des Vakuums
dann entfallen können.

Bei kompliziert gestalteten Teilen ist es zweckmäßig,
düsenförmige Durchgangsöffnungen, vornehmlich in den
tiefsten Bereichen des Formunterteils, ungleichmäßig
verteilt anzuordnen.

Durch die Vorrichtung ist eine dreiteilige Schäumform geschaffen, die keinen herstellungstechnischen
Aufwand erfordert, einfach und zeitsparend zu handhaben ist und mit der darüber hinaus optimale Arbeitsergebnisse zu erzielen sind. Gemäß einer vorteilhaften Ausgestaltung der Vorrichtung ist der aussenliegende Bereich der Trennebene zwischen Rahmen
und Formunterteil mit einer elastischen Dichtung abgeschlossen, derart, daß in der Trennebene ein zum
Schäumraum hin offener umlaufender Spalt freibleibt,
in den die düsenartigen Durchgangsöffnungen für das
Vakuum münden. Hierdurch wird erreicht, daß die Folie ringsum umlaufend die gewünschte Umbiegung einnimmt und unter Beibehaltung dieser Form hinterschäumt wird.

Vorteilhaft ist weiterhin, daß der Formdeckel der
Vorrichtung auf seiner Unterseite vertieft ausgebildet sit und die Vertiefung die vom Rahmen gebildete
Öffnung nach Schließen einnimmt. Hierbei ist von besonderem Vorteil, wenn der Formdeckel auf seiner
Unterseite derart vertieft ausgebildet ist, daß die
Vertiefung um etwa Folienstärke über den zwischen
Rahmen und Formunterteil gebildeten Absatz in den
Schäumraum nach Schließen des Deckels hineinragt.
In vorteilhafter Weise sind Formunterteil, Rahmen
und Formdeckel während des Hinterschäumvorganges
durch Klammern oder Spannverschlüsse oder zwei planparallele Platten eines Formträgers miteinander verbunden. So ist es möglich, den freien Folienrand
nach dem Entformen des fertigen Schaumkörpers durch
Hinterschneiden besonders sauber abzutrennen.

Die Erfindung ist anhand eines Ausführungsbeispieles
schematisch in den Zeichnungen dargestellt. Es zeigt

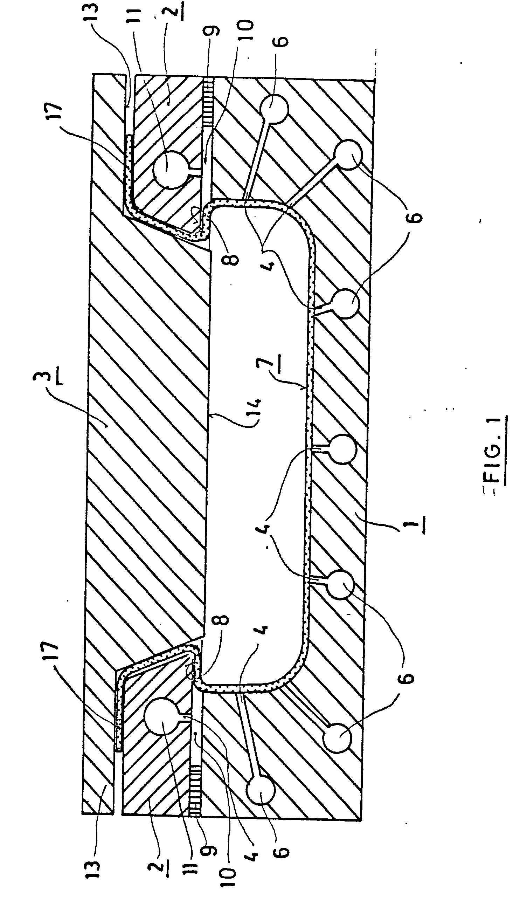

Fig. 1 - einen Querschnitt durch die als
Schäumform ausgebildete Vorrichtung mit einer in die Schäumform
eingelegten und mittels Vakuum an
die Wandung der Form angesaugten
Schaum-PVC-Folie und

Fig. 2 - einen Querschnitt durch ein nach dem Verfahren in einer Vorrichtung gemäß Fig. 1 gefertigten Schaumkörperteils nach Abschneiden des freien Folienrandes.

Die Vorrichtung ist als Schäumform ausgebildet, die aus einem Formunterteil 1, einem auf demselben aufgelegten Rahmen 2 und einem oberen Formdeckel 3 besteht.

Das Formunterteil 1 kann beliebige, in den Zeichnungen nicht dargestellte Konturenausnehmungen aufweisen. In diesem Teil sind gleichmäßig verteilt düsenartige Durchgangsöffnungen 4 angeordnet, die in den Schäumraum 5 münden und an vakuumführenden Leitungen 6 angeschlossen sind. Mit Hilfe des Vakuums wird die Schaum-PVC-Folie 7 an die Konturen des Formunterteils 1 angesaugt und an denselben während des Ausschäumvorganges gehalten.

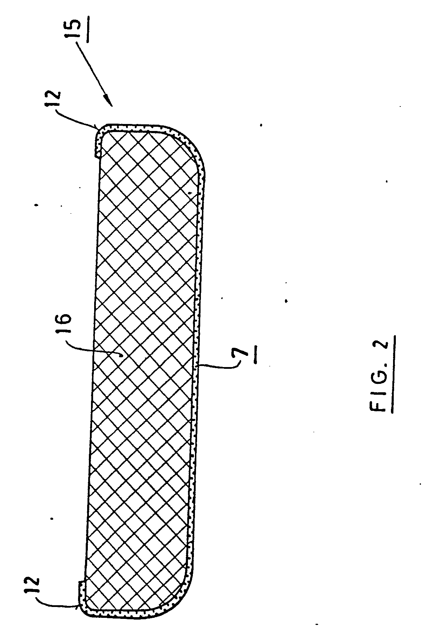

Auf das Formunterteil 1 wird der Rahmen 2 aufgelegt, dessen Öffnungsquerschnitt kleiner ist als die Aussparung im Formunterteil 1, derart, daß ein umlaufender Absatz 8 gebildet ist. Die Trennebene zwischen Formunterteil 1 und Rahmen 2 ist in ihrem äußeren Teilbereich mit einer elastischen Dichtung 9 abgeschlossen. Auf diese Weise bleibt ein zum Schäumraum 5 hin offener, umlaufender Spalt 10 frei, in den, gleichmäßig verteilt, düsenartige Durchgangsöffnungen 4 münden, die an eine vakuumführende Leitung 11 angeschlossen sind. Bei Beaufschlagung der düsenartigen Durchgangsöffnungen 4 mit Vakuum wird die Folie 7 in den zwischen Formunterteil 1 und Rahmen 2 gebildeten Absatz gesaugt und so die randseitig umlaufende Umbiegung 12 der Folie erzielt (vgl. Fig. 2).

Auf den Rahmen 2 wiederum ist der Formdeckel 3 aufgelegt, zwischen dessen Rand 13 und dem Rahmen 2 die Folie 7 während des Hinterschäumvorganges eingespannt ist. Der Formdeckel 3 ist auf seiner Unterseite derart vertieft ausgebildet, daß die Vertiefung 14 um etwa Folienstärke nach unten über den zwischen Rahmen 2 und Formunterteil 1 gebildeten Absatz 8 in den Schäumraum 5 nach Schließen hineinragt.

Während des Hinterschäumvorganges sind Formunterteil 1, Rahmen 2 und Formdeckel 3 beispielsweise durch in der Zeichnung nicht dargestellte Klammern miteinander fest verbunden.

Soll nun ein mit einer Schaum-PVC-Folie 7 verkleidetes Formteil 15 (vgl. Fig. 2) aus Hartschaum-Kunststoff 16 hergestellt werden, so wird zunächst die Folie 7 auf dem Rahmen mitsamt Öffnung von oben aufgelegt und über in den Zeichnungen nicht dargestellte Heizgeräte vorgewärmt. Danach wird durch Beaufschlagung der düsenartigen Durchgangsöffnungen 4 mit Vakuum die Folie 7 an die Konturen von Rahmenabsatz 7 und Formunterteil 1 angesaugt. Das Anlegen eines Vakuums innerhalb des Formunterteils 1 ist nur bei sehr kompliziert gestalteten Teilen erforderlich. Bei der Herstellung einfacher Teile 15, wie beispielsweise einer Sitzschale (Fig. 2), hat bereits das Anlegen eines Vakuums im Rahmen 2 eine entsprechende Verformung der Folie 7 innerhalb des Formunterteils 1 zur Folge, so daß die Einrichtungen im Formunterteil zur Erzeugung des Vakuums beim beschriebenen Ausführungsbeispiel an sich entfallen können.

Alsdann werden die den Kunststoffschaum bildenden
Komponenten in den Schäumraum 5 eingebracht und der
Formdeckel 3 mit Rahmen 2 und Formunterteil 1 fest
verbunden, wobei der Rand 17 der Folie 7 zwischen
Deckelrand 13 und Rahmen 2 festgeklemmt wird. Natürlich kann ein Ausschäumen auch in geschlossenen
Formen erfolgen, d. h., das schäumfähige Gemisch
wird mittels einer Maschine in eine Öffnung, beispielsweise im Formdeckel, eingefüllt.

Nach Abschluß des Ausschäumvorganges werden Formdekkel 3 und Rahmen 2 von dem Formunterteil 1 abgehoben
und das fertige Formteil mit der auf seiner Rückseite umgebogenen und fest verbundenen Folie 7 entnommen. Nach Abschneiden des freien Folienrandes 17
liegt ein Formteil 15 mit allseits sauberer Sichtfläche vor.

Patentansprüche:

1. Verfahren zum Hinterschäumen von Weichschaum-
Kunststoffolien, vorzugsweise PVC-Folien, mit
Hartschaum-Kunststoff, wobei die Kunststoffolie
nach Erwärmen an die Konturen des Formunterteils
mittels Vakuum angepaßt und während des Ausschäumvorganges an die Innenwandung des Formunterteils angesaugt bleibt,
dadurch gekennzeichnet,
daß ein Rahmen (2) zwischen Formunterteil (1)
und -deckel (3) angeordnet wird, dessen Öffnungsquerschnitt kleiner ist als die Aussparung im
Formunterteil, derart, daß ein umlaufender Absatz (8) gebildet ist,
daß ferner in der Trennebene zwischen Formunterteil (1) und Rahmen (2) ebenfalls ein Vakuum erzeugt wird, derart, daß die Folie (7) in den
zwischen Formunterteil (1) und Rahmen (2) gebildeten umlaufenden Absatz (8) gesaugt und so die
Umbiegung (Umbug) der Folie (7) gebildet wird.

2. Verfahren nach Anspruch 1, dadurch gekennzeichnet, daß der Folienrand nach Ansaugen der Folie
(7) an die Konturen des Formunterteils (1) und
den Absatz (8) des Rahmens (2) nach Schließen
des Formdeckels (3) zwischen dem Deckelrand (13)
und dem Rahmen (2) während des Ausschäumens
eingespannt wird.

3. Verfahren nach Anspruch 1 und 2, dadurch gekennzeichnet, daß nach Durchführung des Ausschäumens
des zwischen Folie (7), Rahmen (2) und Deckelvertiefung (14) gebildeten Schäumraumes (5) die
Saugquelle abgeschaltet und zum Entformen Deckel (3) und Rahmen (2) vom Formunterteil (1) abgehoben und das fertige Formteil (15) aus dem Formunterteil (1) entnommen wird.

4. Verfahren nach Anspruch 1 bis 3, dadurch gekennzeichnet, daß der freie Folienrand (17) auf der Rückseite des Formteils (15) hinter der Umbiegungsstelle (12) abgeschnitten wird.

5. Vorrichtung zur Durchführung des Verfahrens nach Anspruch 1 bis 4, wobei dieselbe aus einer einen Schäumraum umschließenden Schäumform besteht, welche sich aus einem Formunterteil, einem auf demselben aufgelegten Rahmen und einem oberen Formdeckel zusammensetzt, und wobei der Formunterteil Öffnungen aufweist, welche mit einem Vakuum beaufschlagbar sind, dadurch gekennzeichnet, daß der Rahmen (2) und das Formunterteil (1) düsenartige Durchgangsöffnungen (4) aufweisen, die in die Trennebene zwischen Rahmen (2) und Formunterteil (1) bzw. in den Schäumraum (5) münden und an vakuumführende Leitungen (6 bzw. 11) angeschlossen sind.

6. Vorrichtung nach Anspruch 5, dadurch gekennzeichnet, daß der außen liegende Bereich der Trennebene zwischen Rahmen (2) und Formunterteil (1) mit einer elastischen Dichtung (9) abgeschlossen sind, derart, daß in der Trennebene ein zum Schäumraum (5) hin offener umlaufender Spalt (10) freibleibt, in den die düsenartigen Durchgangsöffnungen (4) für das Vakuum münden.

7. Vorrichtung nach Anspruch 5 oder 6, dadurch gekennzeichnet, daß der Formdeckel (4) auf seiner Unterseite vertieft ausgebildet ist und die Vertiefung (14) die vom Rahmen gebildete Öffnung
nach Schließen einnimmt.

8. Vorrichtung nach einem oder mehreren der Ansprüche 5 bis 7, dadurch gekennzeichnet, daß der
Formdeckel (3) auf seiner Unterseite derart vertieft ausgebildet ist, daß die Vertiefung (14)
um etwa Folienstärke über den zwischen Rahmen (2)
und Formunterteil (1) gebildeten Absatz (8) in
den Schäumraum (5) nach Schließen des Deckels (3)
hineinragt.

9. Vorrichtung nach Anspruch 5 bis 8, dadurch gekennzeichnet, daß Formunterteil (1), Rahmen (2)
und Formdeckel (3) während des Hinterschäumvorganges durch Klammern oder Spannverschlüsse oder
zwei planparallele Platten eines Formträgers
miteinander verbunden sind.

=FIG. 1

FIG. 2